Europäisches Patentamt

European Patent Office

Office européen des brevets

(11) Numéro de publication : **0 050 076**
**B1**

## FASCICULE DE BREVET EUROPÉEN

(45) Date de publication du fascicule du brevet :
24.04.85

(51) Int. Cl.⁴ : **G 06 F 11/10**

(21) Numéro de dépôt : **81401555.8**

(22) Date de dépôt : **07.10.81**

(54) **Procédé et dispositif d'interdiction de propagation d'erreurs dans un processeur de sécurité.**

(30) Priorité : **15.10.80 FR 8022040**

(43) Date de publication de la demande :
**21.04.82 Bulletin 82/16**

(45) Mention de la délivrance du brevet :
**24.04.85 Bulletin 85/17**

(84) Etats contractants désignés :
**AT BE CH DE GB IT LI LU NL SE**

(56) Documents cités :
**US-A- 3 699 323**
**JOURNAL OF DESIGN AUTOMATION & FAULT-TOLE-RANT COMPUTING, vol. 2, no. 1, janvier 1978, WOODLAND HILLS CALIF, (US), D.C. KO et al. : "Selfchecking of multi-output combinational circuits using extended-parity technique", pages 29-62**

(73) Titulaire : **SOCIETE D'ETUDES ET CONSEILS A E R O**
**(Automation Electronique Recherche Opération-nelle)**
**3, avenue de l'Opéra**
**F-75001 Paris (FR)**

(72) Inventeur : **Fourre, Rémy**
**11, Résidence Le Bois du Roi**
**F-91400 Les Ulis (FR)**
Inventeur : **de Langre, Bruno**
**34, rue Blomet**
**F-75015 Paris (FR)**

(74) Mandataire : **Chameroy, Claude et al**
**c/o Cabinet Malemont 42, avenue du Président Wilson**
**F-75116 Paris (FR)**

## Description

La présente invention concerne un procédé et un dispositif d'interdiction de propagation des erreurs dans un processeur dit de sécurité, c'est-à-dire comportant un moyen interne de détection des pannes. Elle permet en particulier de détecter de façon simple les erreurs multiples dues aux pannes par affaiblissement d'un signal logique utilisé simultanément par plusieurs composants, ce qui n'avait jamais été réalisé jusqu'à maintenant.

De tels processeurs de sécurité sont notamment utilisés dans les systèmes de transport, et en particulier dans l'aviation.

Pour mieux comprendre l'invention, il convient au préalable de préciser le sens donné à certains termes employés dans la suite de la description.

— (Etat de) panne : modification définitive d'un composant qui ne lui permet plus d'assurer sa fonction nominale.

— Erreur : état binaire anormal en un point du processeur traduisant la panne d'un composant. Une panne n'entraîne pas nécessairement une erreur si le composant n'est pas complètement utilisé. Cette panne reste « latente » et non détectée. Réciproquement, une erreur peut être due à un parasite momentané et non à une panne au sens ci-dessus. Cette dernière possibilité n'est toutefois pas envisagée ici.

— Signal : bit ou vecteur de bits en parallèle transmis entre des composants.

— Panne simple : panne qui affecte un seul composant du processeur, tous les autres conservant leur fonction nominale.

— Panne multiple : état du processeur quand plusieurs composants sont simultanément en panne, ces pannes ayant ou non une cause commune.

— Panne franche : panne d'un composant qui produit un signal erroné, mais interprétable de façon unique en binaire.

— Panne floue : panne d'un composant qui produit un signal affaibli dont certains bits peuvent être interprétés comme un « 1 » ou un « 0 » suivant le seuil du composant qui le reçoit.

— Amont, aval : un composant B est « en aval » d'un composant A si le composant B reçoit un signal du composant A. Le composant A est alors « en amont » du composant B.

Un processeur de sécurité, selon la technique actuelle, telle que décrite par exemple dans l'article de la revue « IBM Systems I » vol. 8 N° 1, 1969, pages 48-86 de Tany D.T. et Chein R.T. intitulé « Coding for error control », comporte des moyens détecteurs de pannes qui imposent aux états binaires de plusieurs points du processeur de respecter certains codes. La non-conservation d'un code signifie qu'un composant est en panne et a engendré un signal erroné sur certains points testés.

Cependant, ces codes autodétecteurs ne signalent généralement avec certitude que les erreurs simples. Ainsi, un code de parité ne permettra pas de détecter les erreurs portant sur un nombre pair d'entrées du contrôleur de parité.

C'est pourquoi, dans la technique actuelle, les seules pannes détectées avec certitude sont les pannes « simples » « franches », car une panne simple franche engendre un seul signal erroné, interprétable de façon unique, conduisant à un état logique connu du processeur, ce qui permet de prévoir les tests de détection correspondants.

Or les composants utilisés dans les processeurs sont susceptibles de pannes avec affaiblissement du signal que nous avons appelé pannes floues, car le signal affaibli sera interprété correctement ou non suivant les seuils des composants qui le reçoivent.

L'inconvénient de la technique actuelle est donc qu'une panne simple floue sur un composant dont le signal est distribué à plusieurs composants aval peut engendrer une telle incohérence entre ces composants aval que les moyens détecteurs de panne simple franche seront mis en défaut : tout se passe comme si plusieurs des composants aval étaient en panne franche simultanément.

La présente invention a précisément pour but d'empêcher une panne simple floue d'engendrer plusieurs interprétations erronées simultanées et non testables du signal affaibli.

A cet effet, on utilise un composant intermédiaire appelé rectifieur, dont la fonction est de remettre en forme le signal affaibli, afin qu'il ne puisse avoir qu'une seule même interprétation pour tous les composants aval. Comme un tel composant rectifieur est lui-même susceptible d'une panne floue, on utilise en fait plusieurs rectifieurs, disposés de façon qu'un moyen de test permette de détecter une panne simple floue affectant un de ces rectifieurs, ainsi qu'on le verra plus clairement par la suite.

Plus précisément, l'invention a pour objet un procédé d'interdiction de propagation d'erreurs dans un processeur de sécurité comprenant des circuits de traitement qui effectuent des opérations arithmétiques et logiques sur des opérandes donnés, applicables notamment à ceux de ces circuits de traitement qui sont constitués d'un dispositif amont dont le signal de sortie est transmis à un ensemble de dispositifs disposés en aval et en parallèle sur la sortie du dispositif amont, la sortie du dispositif amont et les sorties des dispositifs aval étant reliées à des moyens de détection des pannes simples franches survenant dans ces dispositifs, caractérisé en ce que les pannes simples floues par l'affaiblissement d'un signal sont détectées par les moyens de détection des pannes simples franches, grâce à l'utilisation de moyens de rectification des signaux affaiblis disposés en aval dans les tronçons de lignes situés entre les divers dispositifs aval, et en ce que les pannes simples franches ou floues de ces moyens de rectification sont aussi détectées par lesdits moyens de détection des pannes simples franches.

Plusieurs formes d'exécution de l'invention sont décrites ci-après à titre d'exemples, en référence aux dessins annexés dans lesquels :

la figure 1 représente le schéma de principe d'un dispositif élémentaire faisant partie d'un processeur de sécurité selon la technique actuelle ;

la figure 2 représente l'application de l'invention à ce dispositif élémentaire ;

la figure 3 représente une variante de l'invention utilisant un comparateur ;

la figure 4 représente une variante de l'invention utilisant plusieurs dispositifs élémentaires en parallèle ;

la figure 5 représente une variante de l'invention utilisant plusieurs moyens de test indépendants ; et

la figure 6 représente une variante de l'invention quand les pannes doubles sont détectables.

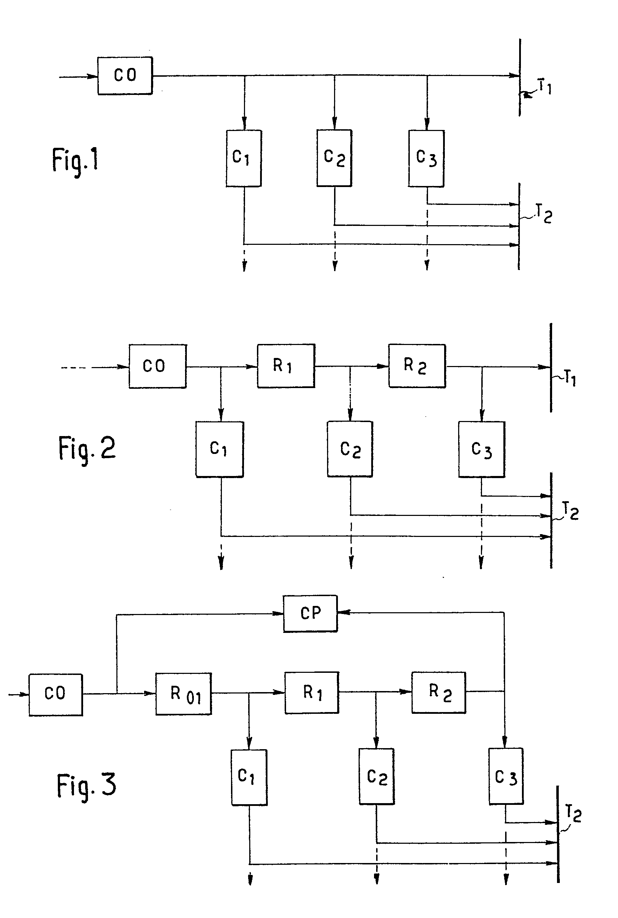

En se référant tout d'abord à la figure 1, on peut voir la situation de la technologie actuelle dans les processeurs dits de sécurité. Les composants $C_1$, $C_2$, $C_3$ reçoivent un même signal du composant CO. Une panne simple franche est détectée par le moyen de test $T_1$ si elle a lieu en CO, et par le moyen de test $T_2$ si elle a lieu en $C_1$, $C_2$ ou $C_3$.

Supposons maintenant une panne floue du composant CO. Cette panne produira un signal affaibli, qui pourrait être interprété comme juste par $T_1$, tout en produisant deux interprétations erronées par deux des trois composants $C_1$, $C_2$, $C_3$. Ainsi deux entrées de $T_2$ seront fausses simultanément, comme si deux composants parmi $C_1$, $C_2$, $C_3$ étaient en panne franche simultanément, et une telle « panne multiple » risque de ne pas être détectée par $T_2$. La panne floue de CO conduit alors à une erreur qui n'est détectée ni par $T_1$, ni par $T_2$.

Le principe de la présente invention est d'assurer qu'un signal douteux ne peut entrer simultanément dans plusieurs composants utilisant le même moyen de test de panne simple franche.

A cet effet, et comme représenté sur la figure 2, un rectifieur $R_1$ est introduit dans le circuit afin de remettre en forme un éventuel signal affaibli sortant de CO. Ainsi $C_2$ et $C_3$ recevront, eux, un signal bien formé, faux ou juste. De plus, comme le rectifieur $R_1$ est lui-même susceptible d'une panne floue, on prévoit un second rectifieur $R_2$ pour remettre en forme le signal issu de $R_1$.

Dans ces conditions, en cas de panne simple floue affectant soit CO, soit $R_1$, soit $R_2$, un seul des composants aval $C_1$, $C_2$, $C_3$ recevra un signal affaibli. Ainsi $C_1$ peut recevoir un signal affaibli de CO seulement, $C_2$ de $R_1$ seulement, $C_3$ de $R_2$ seulement.

En pratique, les rectifieurs $R_1$ et $R_2$ pourront être constitués par des Triggers de Schmitt, inverseurs ou non, ou par des portes logiques.

Détaillons alors les différentes pannes possibles :

— CO est en panne franche ou floue et il donne une information dont l'interprétation par $R_1$ est fausse. La sortie de $R_1$ est fausse, la sortie de $R_2$ aussi, et $T_1$ détecte.

— CO est en panne floue et il donne une information dont l'interprétation par $R_1$ est juste et dont l'interprétation par $C_1$ est éventuellement fausse. La sortie de $R_1$ est juste, la sortie de $R_2$ aussi, et $C_2$ et $C_3$ ont des sorties justes. Donc $T_2$ détecte l'erreur éventuelle en sortie de $C_1$.

— $R_1$ est en panne franche ou floue et il donne une information dont l'interprétation par $R_2$ est fausse. La sortie de $R_2$ est fausse et $T_1$ détecte.

— $R_1$ est en panne floue et il donne une information dont l'interprétation par $R_2$ est juste. La sortie de $R_2$ est juste, et $C_1$ et $C_3$ ont des sorties justes. Donc $T_2$ détecte l'erreur éventuelle en sortie de $C_2$.

— $R_2$ est en panne franche ou floue. $C_1$ et $C_2$ ont des sorties justes. Donc $T_2$ détecte une erreur éventuelle en sortie de $C_3$.

On voit donc en définitive que si le moyen de test $T_1$ reçoit un signal juste, alors au plus un des composants $C_1$, $C_2$, $C_3$ interprète mal le signal et envoie ou enverra une erreur au moyen de test $T_2$, et cette erreur sera détectée comme une erreur qui aurait été causée par une panne simple sur $C_1$ ou $C_2$ ou $C_3$.

De façon générale, un nombre quelconque de composants aval en parallèle, recevant un même signal d'un composant amont susceptible d'une panne floue, peuvent être isolés les uns des autres par des rectifieurs intermédiaires placés en série, un moyen de test sur la sortie du dernier rectifieur assurant qu'un seul des composants aval a pu recevoir un signal affaibli.

La figure 3 montre une variante de réalisation de l'invention dans le cas où le test du composant CO ne se fait pas directement sur sa sortie. Le moyen de test $T_1$ est alors remplacé par un comparateur CP effectuant une comparaison entre la sortie du dernier rectifieur et la sortie de CO, le rectifier $R_{01}$ isolant le comparateur CP du composant $C_1$. Ce comparateur CP pourra être de tout type connu, mais il devra bien entendu avoir une sécurité intrinsèque.

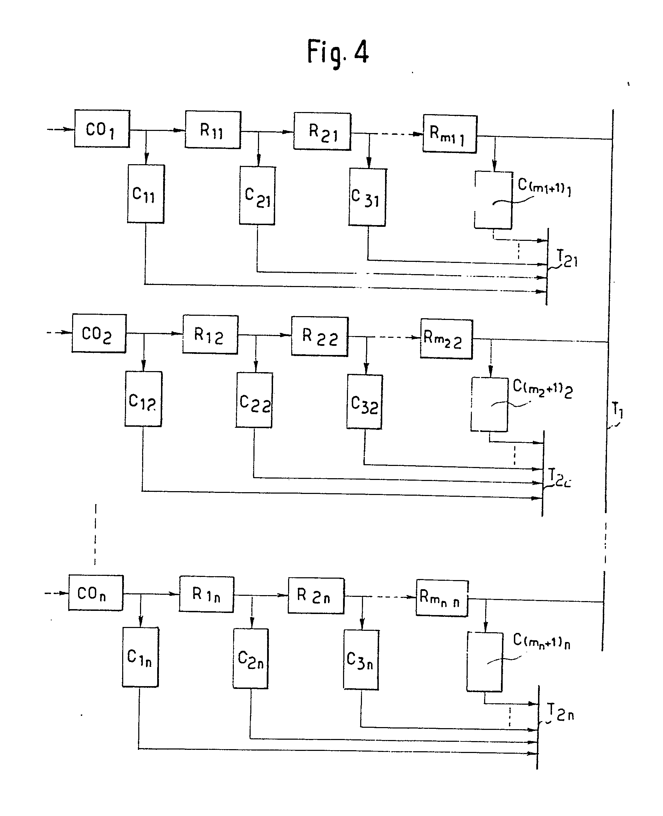

La figure 4 montre une autre variante de réalisation de l'invention, dans le cas où plusieurs composants amont $CO_1$, $CO_2$ ... $CO_n$ sont groupés en parallèle. Le test $T_1$ est alors réalisé sur un code autodétecteur entre les sorties en extrémité de série de ces composants en parallèle.

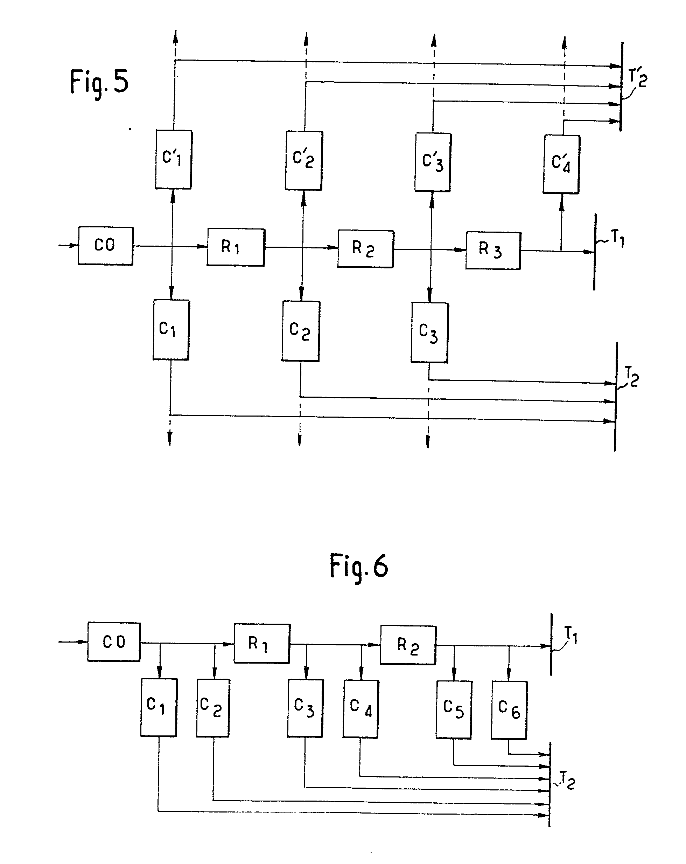

Dans la variante de réalisation représentée sur la figure 5, on utilise plusieurs moyens de test indépendants, tels que $T_2$, $T'_2$, pour tester des ensembles disjoints de composants aval. Dans ce cas, il n'est pas nécessaire de séparer chacun des composants aval par un rectifieur. En effet, à chaque nœud entre deux rectifieurs, le signal peut être distribué à autant de composants aval qu'il y a de moyens de test indépendants.

Dans le cas où le moyen de test $T_2$ permet de détecter les pannes doubles sur les composants aval, on peut également, comme illustré sur la figure 6, grouper ces composants par deux. Il y a alors un seul rectifieur pour deux composants aval.

**Revendications**

1. Procédé d'interdiction de propagation d'erreurs dans un processeur de sécurité comprenant des circuits de traitement qui effectuent des opérations arithmétiques et logiques sur des opérandes donnés, lesdits circuits de traitement étant constitués d'un dispositif amont (CO) dont le signal de sortie est transmis à un ensemble de dispositifs $(C_1, C_2, C_3)$ disposés en aval et en parallèle sur la sortie du dispositif amont, la sortie du dispositif amont (CO) et les sorties des dispositifs aval $(C_1, C_2, C_3)$ étant reliées à des moyens de détection $(T_1, T_2)$ des pannes simples franches survenant dans ces dispositifs, caractérisé en ce que les pannes simples floues par l'affaiblissement d'un signal sont détectées par les moyens de détection des pannes simples franches, grâce à l'utilisation de moyens de rectification $(R_1, R_2)$ des signaux affaiblis disposés en aval dans les tronçons de lignes situés entre les divers dispositifs aval $(C_1, C_2, C_3)$ et en ce que les pannes simples franches ou floues de ces moyens de rectification sont aussi détectées par lesdits moyens de détection des pannes simples franches.

2. Dispositif pour la mise en œuvre du procédé selon la revendication 1, caractérisé en ce qu'il comprend des moyens de rectification $(R_1, R_2)$ montés en série en aval de chaque composant (CO) du processeur dont le signal est distribué à plusieurs composants aval $(C_1, C_2, C_3)$ pour séparer les entrées de ces composants aval, lesdits moyens de rectification transmettant identiquement tout signal d'entrée bien formé et donnant une valeur logique définie à un signal d'entrée affaibli, et des moyens de test $(T_1, T_2)$ permettant de détecter à la fois, une panne simple franche parmi les composants aval $(C_1, C_2, C_3)$ et une sortie fausse sur le dernier moyen de rectification $(R_2)$ de la série.

3. Dispositif selon la revendication 2, caractérisé en ce que le moyen de test de la sortie du dernier moyen de rectification de la série est constitué par un comparateur (CP) effectuant une comparaison entre l'entrée du premier moyen de rectification $(R_{01})$ de la série, qui est aussi la sortie du composant amont (CO), et la sortie du dernier moyen de rectification $(R_2)$ de la série.

4. Dispositif selon la revendication 2, dans lequel plusieurs composants amont $(CO_1, CO_2, ... CO_n)$ sont groupés en parallèle, caractérisé en ce qu'un code autodétecteur est réalisé entre les sorties en extrémité de série de ces composants en parallèle, et en ce que le moyen de test $(T_1)$ de la sortie du dernier moyen de rectification de chaque série est un test du code autodétecteur sur l'ensemble de ces sorties en extrémité de série.

5. Dispositif selon la revendication 2, caractérisé en ce que la sortie de chaque moyen de rectification $(R_1, R_2)$ est utilisée par plusieurs composants aval $(C_2, C'_2, C_3, C'_3)$, et en ce que les composants utilisant la sortie d'un même moyen de rectification sont testés indépendamment les uns des autres.

6. Dispositif selon la revendication 2, caractérisé en ce que les composants aval sont regroupés par lots, tous les composants d'un même lot étant branchés à la sortie d'un même rectifieur, et en ce que les moyens de test permettent de détecter n'importe quelle combinaison de pannes des composants d'un même lot.

## Claims

1. A process for preventing the propagation of errors in a safety processor comprising processing circuits which carry out arithmetic and logic operations on given operands, said processing circuits being formed from an upstream device (CO) whose output signal is transmitted to an assembly of devices $(C_1, C_2 C_3)$ disposed downstream and in parallel across the output of the upstream device, the output of the upstream device (CO) and the outputs of the downstream devices $(C_1, C_2, C_3)$ being connected to means, $(T_1, T_2)$ for detecting simple straightforward breakdowns occuring in these devices, characterized in that simple breakdowns blurred by attenuation of a signal are detected by the means for detecting simple straightforward breakdowns, by using means $(R_1, R_2)$ for rectifying the attenuated signals disposed downstream in line sections situated between the different downstream devices $(C_1, C_2, C_3)$, and in that the simple straightforward or blurred breakdowns of these rectifying means are also detected by said means for detecting simple straightforward breakdowns.

2. A device for implementing the process according to claim 1, characterized in that it comprises rectifying means $(R_1, R_2)$ connected in series downstream of each component (CO) of the processor whose signal is distributed to several downstream components $(C_1, C_2, C_3)$ for separating the inputs of these downstream components, said rectifying means transmitting identically any well formed input signal and giving a defined logic value to an attenuated input signal, and test means $(T_1, T_2)$ for detecting both a simple straightforward breakdown among the downstream components $(C_1, C_2, C_3)$ and a false output on the last rectifying means $(R_2)$ of the series.

3. The device according to claim 2, characterized in that the means for testing the output of the last rectifying means of the series is formed by a comparator (CP) effecting a comparison between the input of the first rectifying means $(R_{01})$ of the series, which is also the output of the upstream component (CO), and the output of the last rectifying means $(R_2)$ of the series.

4. The device according to claim 2, in which several upstream components $(CO_1, CO_2, ... CO_n)$ are connected in parallel, characterized in that a self detecting code is provided between the endmost outputs of the series of these parallel components, and in that the means $(T_1)$ for testing the output of the last rectifying means of each series is a test of the self detecting code on the assembly of these endmost series outputs.

5. The device according to claim 2, characterized in that the output of each rectifying means $(R_1, R_2)$ is used by sereral downstream components $(C_2, C'_2, C_3, C'_3)$, and in that the components using to output of the same rectifying means are tested independently of each other.

6. Device according to claim 2, characterized in that the downstream components are gouped together in batches, all the components of the same batch being connected to the output of the same rectifier, and in that the test means allow any combination of breakdowns of the components of the same batch to be detected.

**Patentansprüche**

1. Verfahren zum Verhindern der Ausbreitung von Fehlern in einem Sicherheitsprozessor mit Verarbeitungsschaltungen, die an bestimmten Operanden arithmetische und logische Operationen ausführen und aus einer vorgeschalteten Einrichtung (CO) bestehen, deren Ausgangssignal zu einer Gruppe von Einrichtungen $(C_1, C_2, C_3)$ übertragen wird, die dem Ausgang der vorgeschalteten Einrichtung nachgeschaltet und an deren Ausgang parallel angeschlossen sind, wobei der Ausgang der vorgeschalteten Einrichtung (CO) und die Ausgänge der nachgeschalteten Einrichtungen $(C_1, C_2, C_3)$ mit Detektoreinrichtungen $(T_1, T_2)$ für einfache offensichtliche Störungen, die in den nachgeschalteten Einrichtungen vorkommen, verbunden sind, dadurch gekennzeichnet, daß einfache unbestimmte Störungen durch die Abschwächung eines Signals durch die Detektoreinrichtungen für einfache offensichtliche Störungen erkannt werden, und zwar aufgrund der Verwendung von Einrichtungen $(R_1, R_2)$ zur Aufbereitung der abgeschwächten Signale, die in Schaltungszweigen nachgeschaltet sind, welche zwischen den verschiedenen nachgeschalteten Einrichtungen $(C_1, C_2, C_3)$ angeordnet sind, und daß die einfachen offensichtlichen oder unbestimmten Störungen dieser Aufbereitungseinrichtungen ebenfalls durch die Detektoreinrichtungen für einfache offensichtliche Störungen erkannt werden.

2. Anordnung zur Durchführung des Verfahrens nach Anspruch 1, gekennzeichnet durch Aufbereitungseinrichtungen $(R_1, R_2)$, die jedem Bauteil (CO) des Prozessors in Reihe nachgeschaltet sind, dessen Signal an mehrere nachgeschaltete Bauteile $(C_1, C_2, C_3)$ abgegeben wird, um die Eingänge dieser nachgeschalteten Bauteile zu trennen, wobei die Aufbereitungseinrichtungen jedes Eingangssignal gut geformt identisch übertragen und einem abgeschwächten Eingangssignal einen definierten logischen Wert geben, und durch Testeinrichtungen $(T_1, T_2)$, die gestatten, eine einfache offensichtliche Störung unter den nachgeschalteten Bauteilen $(C_1, C_2, C_3)$ und einen fehlerhaften Ausgang an der letzten Aufbereitungseinrichtung $(R_2)$ der Reihe zu erkennen.

3. Anordnung nach Anspruch 2, dadurch gekennzeichnet, daß die Testeinrichtung des Ausgangs der letzten Aufbereitungseinrichtung der Reihe aus einem Komparator (CP) besteht, der einen Vergleich zwischen dem Eingang der ersten Aufbereitungseinrichtung $(R_{01})$ der Reihe, der außerdem der Ausgang des vorgeschalteten Bauteils (CO) ist, und dem Ausgang der letzten Aufbereitungseinrichtung $(R_2)$ der Reihe ausführt.

4. Anordnung nach Anspruch 2, bei der mehrere vorgeschaltete Bauteile $(CO_1, CO_2, \ldots CO_n)$ parallel zusammengefaßt sind, dadurch gekennzeichnet, daß ein selbstprüfender Code zwischen den Ausgängen am Ende der Reihe dieser parallelen Bauteile verwirklicht ist und daß die Testeinrichtung $(T_1)$ des Ausgangs der letzten Aufbereitungseinrichtung jeder Reihe ein Test des selbstprüfenden Codes für sämtliche Ausgänge am Ende der Reihe ist.

5. Anordnung nach Anspruch 2, dadurch gekennzeichnet, daß der Ausgang jeder Aufbereitungseinrichtung $(R_1, R_2)$ durch mehrere nachgeschaltete Bauteile $(C_2, C'_2, C_3, C'_3)$ benutzt wird und daß die Bauteile, die den Ausgang ein und derselben Aufbereitungseinrichtung benutzen, unabhängig voneinander getestet werden.

6. Anordnung nach Anspruch 2, dadurch gekennzeichnet, daß die nachgeschalteten Bauteile satzweise zusammengefaßt sind, wobei sämtliche Bauteile ein und desselben Satzes an den Ausgang ein und derselben Aufbereitungseinrichtung angeschlossen sind, und daß die Testeinrichtungen gestatten, jede Kombination von Störungen der Bauteile ein und desselben Satzes zu erkennen.

Fig.1

Fig. 2

Fig. 3

# Fig. 4

Fig.5

Fig.6